# EUROPEAN PATENT APPLICATION

(11) **EP 2 368 818 A1**
(43) Date of publication of application: **28.09.2011**
(21) Application number: 11158769.7
(22) Date of filing: 18.03.2011
(51) Int. Cl.: B65G 47/14, B23Q 7/00, B23Q 7/10

(54) **Magazine for a bar loader**

(30) Priority: 22.03.2010 IT MI20100461
(71) Applicant: Pietro Cucchi S.p.A., 20060 Bussero (MI) (IT)
(72) Inventor: Cucchi, Pietro, 20060, Bussero (MI) (IT)
(74) Representative: Ottazzo, Marco Francesco Agostino

(57) **Abstract**

A magazine (10) for a bar loader (20) is described, particularly but not exclusively used in the field of mechanical industry. The magazine (10) comprises a plurality of bar supports (11), arranged one next to the other along a development direction, so as to define a longitudinal housing for a plurality of bars (B). The bar supports (11) comprise at least one selection and ejection means (16; 21) to selectively supply one or more bars of the plurality of bars (B) to the storage means (51) of the bar loader (20). The magazine (10) is equipped with handling means (40; 41) between a working position, at said storage means (51) of the bar loader (20), and a loading position, substantially far away from such storage means (51). The magazine (10) is equipped with connection and guide means (19, 19') between the magazine (10) itself and the bar loader (20).

## Description

The present invention refers to a bundle type magazine for bar loaders, which is particularly but not exclusively used in the field of mechanical industry. In particular, the present invention refers to a bundle type magazine that is suitable for being used with industrial machines, like for example bar loaders for automatic parallel lathes and so on.

Generally, automatic bar loaders for lathes of the known type comprise a flat storage means, arranged below the actual loading mechanism, said flat storage means being in turn made up of a structure of metal tubes welded to one another that are perfectly integrated with the frame of the loader. The bars to be inserted into the lathe are then rested, manually and one at a time, on such a structure of metal tubes. The awkward manual loading manoeuvre of the aforementioned type of flat storage means clearly has drawbacks in terms of work safety and in terms of the supply speed. Therefore, other types of magazines for bar loaders for lathes, which are defined as "bundle type" magazines and that are associated with the aforementioned flat magazines, have been made. Indeed, generally, such bundle magazines are arranged next to the bar loaders which they must automatically feed, and comprise special cradles made up of transverse straps, made from resistant and flexible material, on which it is possible to load an entire group or bundle of bars at a single time. Such cradles are capable of lifting the bundle of bars and, thanks to the help of a selection means, of selecting a single bar from such a bundle and introducing it into the flat storage means integrated in the bar loader.

In view of all of this it is easy to understand some of the advantages that can be obtained by adopting bundle type magazines. Indeed, the bundle type magazine can contain a lot more bars and, therefore, it can ensure a greater autonomy with respect to the manual loading procedure of the flat storage means. Moreover, it is important to underline that such a bundle type magazine can be loaded automatically by an overhead crane or by a forklift (pallet truck). In such a way, both with the crane and with the pallet truck, the bundle of bars, generally kept together with ropes or straps, is lowered into the aforementioned cradles without the loader stopping from operating. The only manual operation then consists, generally, in cutting and removing the straps that keep the bundle together. In such a way, once the bundle in the cradles of the magazine have been set free, the feeding operation of the bars occurs automatically.

Known bundle type magazines, however, can have some drawbacks of a practical nature. Indeed, there are workshops in which there is no overhead crane or it cannot be positioned exactly at the bundle type magazine and it is therefore necessary to use the pallet truck i.e. the manual loading procedure.

Moreover, there are workshops without overhead cranes in which many loaders are housed, arranged one next to the other and, consequently, there is not even the space, between one loader and the next, for the pallet truck to pass through to unload the bundle of bars into the magazines. Even the manual loading, in small spaces, is not particularly easy and safe.

Mobile type bundle magazines have thus been made, so as to make the loading easier. A bundle type magazine of the mobile type is described, for example, in the American patent US 4 744 716 A. Even these mobile type bundle magazines however have drawbacks, like for example a not perfect linearity of their translation movement.

The purpose of the present invention is therefore that of making a bundle type magazine for bar loaders that is capable of solving the aforementioned drawbacks of the prior art in an extremely simple, cost-effective and particularly functional manner.

In detail, one purpose of the present invention is that of making a bundle type magazine for bar loaders that can easily be fed in any condition of use.

Another purpose of the present invention is that of making a bundle type magazine for bar loaders in which a correct and linear translation movement of the bundle type magazine itself is ensured.

A further purpose of the present invention is that of making a bundle type magazine for bar loaders that respects the safety criteria for the operators.

These and other purposes according to the present invention are achieved by making a bundle type magazine for bar loaders as outlined in claim 1.

Further characteristics of the invention are highlighted in the dependent claims, which are an integrating part of the present description.

The characteristics and advantages of a bundle type magazine for bar loaders according to the present invention shall become clearer from the following description, given as an example and not for limiting purposes, with reference to the attached schematic drawings, in which:
figure 1 is a schematic side elevation view of some elements of a first preferred embodiment of a bundle type magazine for bar loaders according to the present invention;

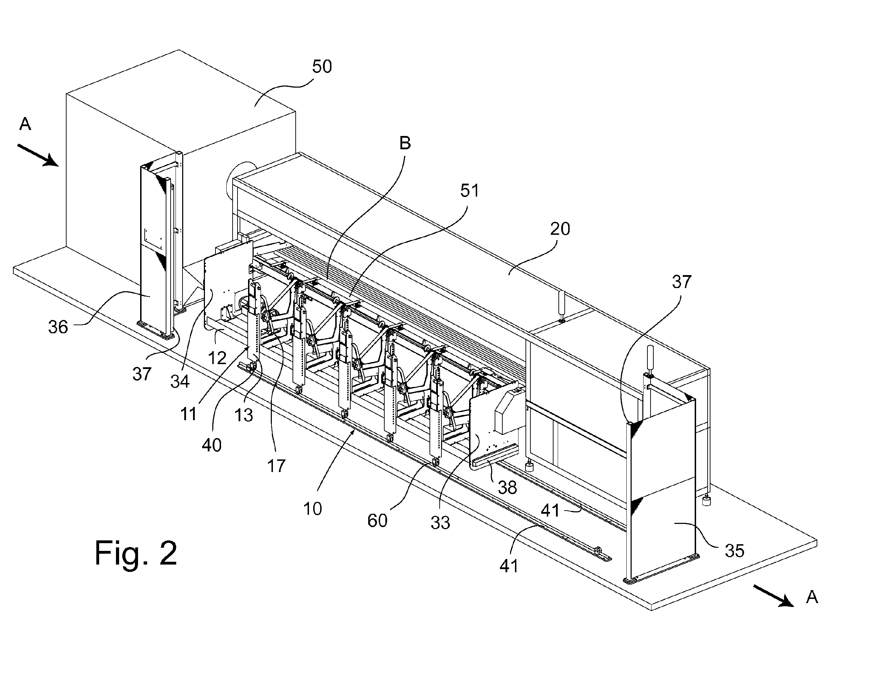

figure 2 is a first perspective view, from the front side, of the bundle type magazine for bar loaders of figure 1; and
figure 3 is a second perspective view, from the rear side, of the bundle type magazine for bar loaders of figure 1.

With reference to the figures, a bundle type magazine for bar loaders is shown, wholly indicated with reference numeral 10.

The bundle type magazine 10 for bar loaders is placed next to a generic bar loader 20, equipped with flat storage means 51 for a plurality of bars B to be supplied to a machine tool, for example a lathe 50, so that such bars B can be machined according to the requirements. In the illustrated embodiment, the loading mechanism of the bar loader 20 is of the type provided with a rotary drum 22, with channels 23 for the bars B to slide towards the corresponding pincers in the drum of the lathe 50, but it could be of any type known in the state of the art.

The bundle type magazine 10 comprises a plurality of supports 11 for the bars B, equally spaced apart from one another along the development direction A of the bar loader 20 for a length that is substantially equal to that of the flat storage means 51. Such supports 11 for the bars B are, moreover, constraint at their bottom to a flat support frame 12.

In detail, each of the supports 11 for the bars B comprises two vertical portions 13, arranged in a direction perpendicular to the development of the bar loader 20. The height of the vertical portions 13 of each support 11 for the bars B can be varied so as to be adapted to the various heights of the existing bar loaders 20.

Moreover, each of the supports 11 for the bars B comprises a first inclined portion 14 and a second horizontal portion 15, fixedly attached to the vertical portions 11. In particular, the first inclined portion 14 joins the two vertical portions 13 of each support 11 for the bars B at the area substantially at the centre of such vertical portions 13. The second horizontal portion 15 is, on the other hand, arranged below with respect to the first inclined portion 14 and joins the two vertical portions 13 of each support 11, directly resting on the flat support frame 12.

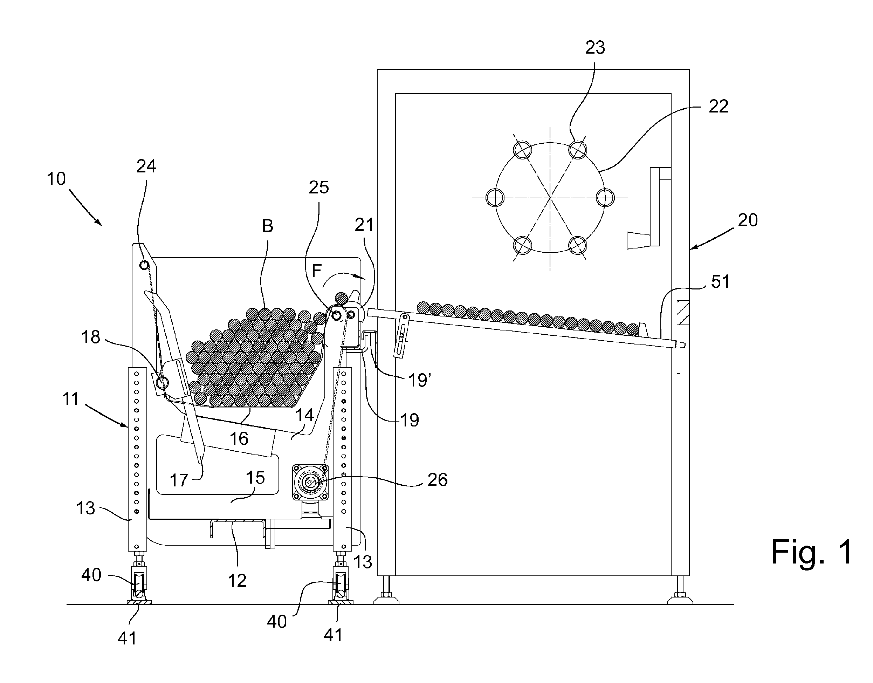

Moreover, a belt 16, preferably of flexible material, is stretched between the two opposite vertical portions 13 of each support 11 for the bars B. Such a belt 16 is fixedly connected, at one of its ends, to a first reel 24 and it is capable of sliding on a second reel 25 arranged at the upper end of the vertical portion 13 of each support 11 closest to the bar loader 20. The other end of the belt 16 is therefore capable of winding around a rotary shaft 26, so as to lift the entire bundle of bars. A selection and ejection means 21 selectively supplies one or more bars B, in the direction of the arrow F of figure 1, to the flat storage means 51 of the bar loader 20.

Next to each support 11 for the bars B thrust blades 17 are arranged, fixedly connected in a rotary manner with pins 18 that are fixed to each support 11 for the bars B at the area substantially defined by the meeting point between the vertical portion 13 farthest from the bar loader 20 and the first inclined portion 14.

According to the invention, the bundle type magazine 10 for bar loaders is equipped with handling means, arranged under each support 11 for the bars B or under the flat support frame 12, suitable for allowing a translating motion of the bundle type magazine 10 itself. Indeed, the vertical portions 13 of each support 11 for the bars B can be equipped, at their bottom, with metallic wheels 40, that may or may not be provided with a rim, which move on one or more rails 41 that are fixedly connected to the ground or on a suitable platform. Such rails 41 extend, in the development direction A of the bar loader 20, substantially for the entire length of the bar loader 20 itself or, if necessary, even for a greater length.

In an alternative embodiment of the bundle type magazine 10, the metallic wheels 40 can be replaced by wheels made from plastic or from elastomeric material, for example rubber, or by simple slides that rest on suitable guides or directly on the ground.

The bundle type magazine 10 for bar loaders, therefore, can slide translating with respect to the bar loader 20 by means of the wheels 40 and of the suitable rails 41 with which it is equipped, or rather, by means of rubber wheels on any surface, so as to facilitate the loading operations of the bars B.

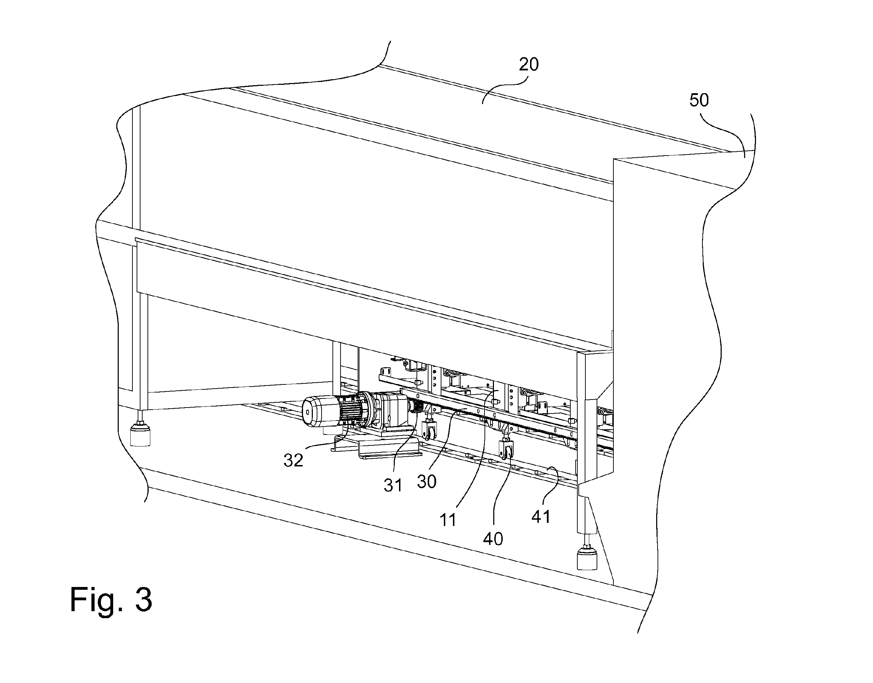

In the illustrated embodiment, the movement of the bundle type magazine 10 for bar loaders occurs by means of a co-operation between a rack 30 (figure 3), made on the lower surface of the flat support frame 12, and a gear wheel 31. Such a gear wheel 31 is preferably actuated by a geared motor 32 fixed to the ground underneath the bar loader 20.

Moreover, in order to avoid the tipping over of the bundle type magazine 10, between the bar loader 20 and the bundle type magazine 10 itself there are connection and guide means made, for example, with pairs of brackets 19 and 19', preferably made from metal, which engage in one another. Such connection and guide means 19 and 19' are particularly effective, so as to ensure a correct and linear translation movement of the bundle type magazine 10, if it is not possible to have rails 41 on the ground. Indeed, sometimes, especially for raised tracks, the rails 41 can project out, even by a lot, from the tail of the bar loader 20. This is inconvenient since pallet trucks or various carts generally pass through corridors of workshops.

The translating movement of the bundle type magazine 10 for bar loaders requires there to be suitable provisions to ensure safety for the user of such a bundle type magazine 10. Consequently, at the two ends of the bundle type magazine 10, mounted on two plates 33 and 34 fixed to the flat frame 12 and acting as a shoulder for the bars B, it can be foreseen for there to be contact sensors 38 that are capable of immediately stopping the movement of the bundle type magazine 10 for bar loaders in the case in which someone or something is on its path.

Preferably, also one or more fixed or mobile protection and safety bulkheads 35 and 36 can be foreseen, so as to facilitate maintenance operations of the machine, which are positioned at one or both of the ends of the bar loader 20 on the side in which there is the bundle type magazine 10 for bar loaders. On such bulkheads 35 and 36, infrared sensors 37 are preferably mounted, capable of controlling the start up and/or stopping of the bundle type magazine 10 in the case in which it operates automatically, as shall be described in greater detail in the rest of the description.

The operation of the bundle type magazine 10 for bar loaders according to the invention is as follows. When the bundle type magazine 10 for bar loaders is empty, it is made to translate into a loading position, which is easier to access by pallet trucks or overhead cranes. Such a loading position is normally the one at the end of the bar loader 20 opposite to the lathe 50. In such a loading position, by means of a pallet truck or of an overhead crane, one or more bundles of bars B are lowered resting on the belts 16 of the bundle type magazine 10 for bar loaders.

The bars B lowered onto the belts 16 are usually held together, so as to form a single bundle, with straps that are cut or removed manually at the end of the loading procedure of the bundle type magazine 10 for bar loaders. After such an operation, the bundle type magazine 10 for bar loaders is made to translate up to an operating position, at the flat storage means 51 of the bar loader 20. In such an operative position, the bundle type magazine 10 begins to feed the flat storage means 51 of the bar loader 20, in a *per se* known manner, until all the bars B themselves have run out.

The bundle type magazine 10 for bar loaders can be, in an alternative embodiment, completely automated. In such a case, when the bundle type magazine 10 is completely empty, a sensor can control it to back up to the loading position. The loading of the bundle of bars B can occur with completely automatic crane, which deposit the bundle of bars B into the bundle type magazine 10 for bar loaders, without the aid of an operator. When the operation is completed, the bundle type magazine 10 returns into the operative position and starts to feed bars B to the flat storage means 51 of the bar loader 20 again without stopping its operation.

In the case of automatic movement, the area corresponding to the loading position can be left open so as to promote maintenance on the machine. In such a case, the infrared sensors 37 positioned on the protection and safety bulkheads 35 and 36, and/or the contact sensors 38 positioned on the plates 33 and 34 at the end of the bundle type magazine 10 for bar loaders, ensure that the movement of such a bundle type magazine 10 stops in the case in which someone or something is on its path.

From the description carried out, the characteristics of the bundle type magazine for bar loaders object of the present invention should be clear, as the relative advantages should also be clear.

Indeed, the possibility of translating the bundle type magazine for bar loaders to a loading position that can easily be accessed by a pallet truck or by any other means of transport makes the feeding of the magazine itself easier.

The bundle type magazine for bar loaders according to the present invention is therefore capable of occupying an area that is much greater than the flat storage means of the bar loader which it is next to, even if it has a length that is not greater than that of the flat storage means itself, thus minimizing its bulk. Moreover, it is sufficient to use infrared sensors or contact sensors, respectively associated with fixed protection bulkheads and/or with plates fixedly attached to the ends of the bundle type magazine for bar loaders, so as to be capable of ensuring a high level of safety for the users.

The bundle type magazine for bar loaders of the present invention thus conceived can in any case undergo numerous modifications and variants, all covered by the same inventive concept; moreover, all the details can be replaced by technically equivalent elements. In practice the materials used, as well as the shapes and sizes, can be any according to the technical requirements.

The scope of protection of the invention is thus defined by the attached claims.

## Claims

1. Magazine (10) for the bar loader (20) of a machine tool (50), comprising a plurality of bar supports (11), arranged one next to the other along a development direction (A) so as to define a longitudinal housing for a plurality of bars (B), said bar supports (11) comprising at least one selection and ejection means (16; 21) to selectively supply one or more bars of said plurality of bars (B) to the storage means (51) of the bar loader (20), said magazine (10) being equipped with handling means (40; 41) between a working position, at said storage means (51), and a loading position, substantially far away from said storage means (51), **characterized in that** it comprises connection and guide means (19, 19') between said magazine (10) and said bar loader (20).

2. Magazine (10) according to claim 1, **characterized in that** said handling means comprise at least one rail (41) and a plurality of wheels (40), underneath said plurality of bar supports (11), cooperating with said at least one rail (41).

3. Magazine (10) according to claim 2, **characterized in that** said at least one rail (41) has a length substantially equal to that of the bar loader (20).

4. Magazine (10) according to claim 1, **characterized in that** said handling means comprise a plurality of wheels made of plastic or elastomeric material, underneath of said plurality of bar supports (11), resting directly onto the ground.

5. Magazine (10) according to any one of the preceding claims, **characterized in that** it comprises two plates (33, 34), fixed to a flat frame (12) and acting as shoulder for said plurality of bars (B), at the two ends of said magazine (10) and parallel to said bar supports (11).

6. Magazine (10) according to claim 5, **characterized in that** on said plates (33, 34) there are contact sensors (38) that can immediately stop the magazine (10) movement in case someone or something is on its path.

7. Magazine (10) according to any one of the preceding claims, **characterized in that** it comprises one or more protection and safety bulkheads (35, 36), each located at one end of the bar loader (20) on the side of said magazine (10).

8. Magazine (10) according to claim 7, **characterized in that** on said protection and safety bulkheads (35, 36) there are infrared sensors (37) to control starting and/or stopping of magazine (10) in case of automatic operation of said magazine (10).

9. Magazine (10) according to any one of the preceding claims, **characterized in that** it is handled through a gear wheel (31) co-operating with a rack (30) located on said magazine (10), said gear wheel (31) being operated by a geared motor (32) fixed to the ground underneath to said bar loader (20).
